# EUROPEAN PATENT SPECIFICATION

(11) **EP 2 586 171 B1**
(45) Date of publication and mention of the grant of the patent: **26.08.2015**
(21) Application number: 11728782.1
(22) Date of filing: 27.06.2011
(51) Int. Cl.: H04L 29/06, H04L 29/08, H04L 12/58, H04N 21/254, H04N 21/4788, G06F 21/62, H04N 21/258

(54) **METHOD, SERVER AND SYSTEM FOR GRANTING TEMPORARY ACCESS TO ELECTRONIC CONTENT**
VERFAHREN, SERVER UND SYSTEM ZUR GEWÄHRUNG VON VORÜBERGEHENDEM ZUGANG ZU ELEKTRONISCHEN INHALTEN
PROCÉDÉ, SERVEUR ET SYSTÈME POUR ACCORDER UN ACCÈS TEMPORAIRE À UN CONTENU ÉLECTRONIQUE

(30) Priority: 25.06.2010 US 823304
(43) Date of publication of application: 01.05.2013
(73) Proprietor: Telefonaktiebolaget LM Ericsson (publ), 164 83 Stockholm (SE)
(72) Inventor: VAN SLINGERLAND, Florin, NL-4876 CM Etten-Leur (NL); BURGERS, Stefan, NL-5654 NL Eindhoven (NL)
(74) Representative: Algemeen Octrooi- en Merkenbureau B.V.
(86) International application number: PCT/EP2011/003151
(87) International publication number: WO 2011/160855

(56) References cited:
- WO-A1-2009/153477
- US-A1- 2002 073 033
- US-A1- 2007 226 169
- US-A1- 2008 134 294

## Description

### Background

The present invention relates to information management systems. More particularly, the present invention is directed to a system, method, and server for granting an identified user temporary access to another user's electronic content.

### Technical Field

An example of electronic content is social content such as videos, photographs, status messages, and the like which individuals store in online storage facilities of a so-called social media network.

In prior art information management systems and social media networks, such as disclosed by US patent application US2008/0134294, the individual can access his own social electronic content, but others cannot access this content without permission. When an individual desires to share some of his or her social electronic content with others, existing social media network systems grant access on a permanent basis. This is acceptable if the individual desires to share the content between friends and family. However, for other contacts such as business or professional contacts, the individual may not desire to permanently share the social electronic content.

### Summary

The present invention solves this problem with a system, method, and server for granting an identified user temporary access to protected electronic content. The permission granted to the identified user, in addition to the time period, also defines the scope of what content he or she is permitted to access.

In one embodiment, the present invention is directed to a method of granting access to electronic user content for use in a social media network comprising a plurality of users and arranged for sharing electronic user content amongst the plurality of users, the method comprising the steps of: receiving, by a server, a request originating from a first user of the plurality of users to access electronic user content of a second user of the plurality of users, and processing the request by a policy engine function comprised in the server for controlling access to the electronic user content.

The method is characterized in that the policy engine function performing the steps of retrieving relationship information specifying a type of relationship between the first and said second user comprising at least one identifiable characteristic, applying an access rule specified by the second user, the access rule matching the relationship Information, the access rule specifying a period of time the electronic user content of the second user is available for the first user and which content of the second user's electronic content the first user is permitted to access, wherein when the specified period of time has not expired, the policy engine function allowing each first user having said identifiable characteristic access to the second user's electronic permitted content for the specified period of time, and when the specified period of time has expired, the policy engine function denying the first user access to the second user's electronic content.

The server can be any type of processor controlled server, such as a server In a switching node or control node or elsewhere In a telecommunications system, performing operations related to the telecommunications system. The server may also be a dedicated server such as a Policy Engine connected to or connectable by the telecommunications systems or an other data processing system, for processing social media content In a social media network.

The period of time wherein access Is allowed may be specified as a particular time duration wherein access is allowed, such as one hour, one day, one week or the like, from the start of a first access, for example, but also during a particular time of the day, a particular day or days of a week and the like, or combinations of both, for example.

The user content may be stored or available from remote online storage facilities such as accessible by an access server or servers of the social media network.

In an example, besides a particular period of time, an access rule may specify which content or how much of the second user's electronic content is permitted to access by the first user, and the step of allowing includes restricting access to this permitted content. With such an access rule, a user may specify what particular part of his electronic content or what particular type files and the like is accessible to a particular first user.

The skilled person will appreciate that other access rules may be defined and applicable, specifying further criteria for permitting access to a user's electronic content.

The relationship information may identify a particular user to whom temporarily access is granted to the second user's electronic content. In a further example the relationship information comprises at least one identifiable characteristic and wherein the method further comprises retrieving, by the policy engine function, the at least one identifiable characteristic of a first user and allowing each first user having the identifiable characteristic access to the second user's electronic content for the specified period of time.

The identifiable characteristic may be any such as an identifier identifying users of a particular group, such as employees of a same company, members of a same association, and the like.

The relationship information may be stored in an internal database in the server, in an Active Address Book storage or database external or remote from the server, and/or included in a request from a user.

The access rule or rules by the second user may be stored and available from an internal database in the server and/or in a remote storage or database such as an Active Rules Book, which may be incorporated with the Active Address Book, for example.

The databases storing the relationship information and access rule or rules are accessible, either directly or indirectly, by the users of the social media network for generating or specifying and applying their individual preferences.

In an example, instead of or in addition to storing access rules in a network database, the method provides for obtaining an access rule from the second user directly, via a messaging service, such as an e-mail service, a short messaging service, SMS, a multimedia messaging service, MMS, or a messaging service provided by the social media network, for example.

First it may be determined by the policy engine function whether an access rule matching the relationship information is stored in a database available for or located in the server. When there is not an access rule matching the relationship information stored in the server or an other database, the second user is prompted by the policy engine

function to provide an access rule. The second user may, for example, visit a special web site provided by the social media network for specifying an access rule, or may provide an access rule by return e-mail. SMS, MMS, or the like.

Preferably, the second user is prompted via the social media network if the second user is/connected or online with the social media network. In such a case the second user preferably replies via the social media network. If the second user is not online, any of an e-mail, SMS or MMS message may be forwarded to the second user and the second user may reply by logging in to the social media network or by responding with a return e-mail, SMS, MMS message or the like.

The first user may be informed of the granted access. In an example, when the specified period of time has not expired, a response Is send to the first user indicating that the content is available to the first user. When the specified period of time has expired, a response is send to the first user indicating that the content is no longer available. This response may be forwarded via the social media network or an other messaging service available to the first user, such as e-mail, SMS or MMS.

In an other example, the policy engine function sends to the second user a notification of the first user's access to the second user's electronic content during the specified period of time and/or a notification that the first user attempted to access the second user's electronic content after the specified period of time expired. This notification may be forwarded via the social media network or an other messaging service available to the second user, such as e-mail, SMS or MMS.

In a social media network, users often add and remove content. To take this Into account, In a further example, when the first user is granted access to the second user's content, controlled by an access server, for example, at least the content of a second user to which first users are permitted access to is periodically refreshed by the access server and the first user is provided access to the refreshed content.

In another embodiment, the present invention is directed to a server for controlling access to electronic user content for use in a social media network comprising a plurality of users and arranged for sharing electronic user content amongst the plurality of users, the server comprising a communication unit, arranged for receiving a request originating from a first user to access electronic user content of a second user of the plurality of users.

The server Is characterized by a relationship retrieval unit arranged for retrieving relationship information specifying a type of relationship between the first and the second user comprising at least one identifiable characteristic, and a matching unit, arranged for applying an access rule specified by the second user, the access rule matching the relationship information, the access rule specifying a period of time the electronic user content of the second user is available for the first user and which content of the second user's electronic content the first user Is permitted to access, a timer, arranged for determining whether the specified period of time has expired, and an access granting unit, arranged for allowing each first user having the identifiable characteristic access to the second user's electronic content when the specified period of time has not expired and arranged for denying the first user access to the second user's electronic permitted content when the specified period of time has expired.

To inform the first user of the granted access, in an example, when the specified period of time has not expired, the communication unit sends a response toward the first user indicating that the content is available to the first user. When the specified period of time has expired, the communication unit sends a response toward the first user indicating that the content is no longer available. This response may be forwarded via the social media network or an other messaging service available to the users, such as e-mail, SMS or MMS.

In an example, the access granting unit is arranged for allowing restricted access to the second user's electronic content specified by the access rule. The restriction applies to a particular part of the second user's electronic content, i.e. how much of the second user's content the first user is allowed to access, or what particular type files and the like Is accessible to a first user.

In an other example, the first user has at least one identifiable characteristic, and the relationship retrieval unit is arranged for retrieving the identifiable characteristic of the first user, and wherein the access granting unit Is arranged for allowing each first user having the identifiable characteristic access to the second user's electronic content for the specified period of time.

For retrieving the relationship information, the relationship retrieval unit, in an example, is arranged for retrieving the relationship information from an internal database

of the server and/or an Active Address Book storage or database external to the server and/or the request.

For retrieving an access rule, the server, in an example, comprises a rule retrieval unit, arranged for obtaining the access rule from the second user and/or an Internal rules database of the server for storing access rules and/or an Active Rules Book storage or database which may be incorporated with the Active Address Book external to the server.

When there Is not an access rule matching the relationship information stored within a rules database, the rule retrieval unit is arranged for obtaining the access rule from the second user. To this end a messaging service may be applied and the rule retrieval unit is configured to obtain the access rule from the second user through any or all of the social media network, by e-mail, SMS, MMS, or the like, by an intermediate message server and/or web server. Such messages may be communicated by the communication unit of the server.

In an example, the communication unit is configured for sending to for sending to the second user, a notification of the first user's access to the second user's electronic content during the specified period of time and/or a notification that the first user attempted to access the second user's content after the specified period of time expired.

In a further embodiment, the present invention Is directed to a system for controlling access to electronic user content in a social media network comprising a Social Media Portal, SMP, arranged for sharing electronic user content amongst a plurality of users, the system comprising a server In communication with the SMP and arranged for controlling access to the electronic user content, wherein the SMP includes a unit for forwarding to the server a request originating from a first user to access electronic user content of a second user of the plurality of users, and wherein the server includes a communication unit, arranged for receiving the request.

The server is characterized by a relationship retrieval unit arranged for retrieving relationship information specifying a type of relationship between the first and the second user comprising at least one Identifiable characteristic, and a matching unit, arranged for applying an access rule specified by the second user, the access rule matching the relationship information, the access rule specifying a period of time the electronic user content of the second user is available for the first user and which content of the second user's electronic content the first user is permitted to access, a timer arranged for determining whether the specified period of time has expired, an access granting unit, arranged for allowing each first user having the identifiable characteristic access to the second user's electronic content when the specified period of time has not expired and arranged for denying the first user access to the second user's electronic content when the specified period of time has expired, wherein the communication unit is further arranged for sending a response from the access granting unit to the SMP allowing or denying the first user access to the second user's electronic permitted content.

In the following section, the invention will be described with reference to exemplary embodiments illustrated in the enclosed figures.

### Brief description of the drawings

Fig. 1 is a message flow diagram illustrating the flow of messages in a first example of the method of the present Invention;
Fig. 2 is a message flow diagram illustrating the flow of messages in a second example of the method of the present invention;
Fig. 3 is a message flow diagram illustrating the flow of messages in a third example of the method of the present invention;
Fig. 4 is a message flow diagram illustrating the flow of messages in a fourth example of the method of the present invention; and
Fig. 5 Is a simplified block diagram of an example of a server of the present invention.

### Detailed description

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

The invention is explained below in the context of a scenario in which an individual tells his customer about his vacation, and the customer wants to see the individual's vacation photographs. The photographs are stored by an online storage service. The individual would like to share the photographs, but does not want to give the customer permanent access to all of his photographs, and would like to grant access for a limited duration. It should be understood that the present invention is not limited to electronic social content such as vacation photographs or to customers only. The inventive concepts can be applied to any kind of protected electronic content and to any kind of contacts and relationships in a social media network.

Two main scenarios are described herein. Both scenarios assume two users, User-A or first user who wants access to the electronic content, and User-B or second user who is the owner of the electronic content. In a first scenario, both users are online. User-B can directly grant or deny temporary access by defining an access rule; and User-A can directly obtain temporary access to the content. In a second scenario, User-B is not online, and therefore cannot directly grant or deny the requested access.

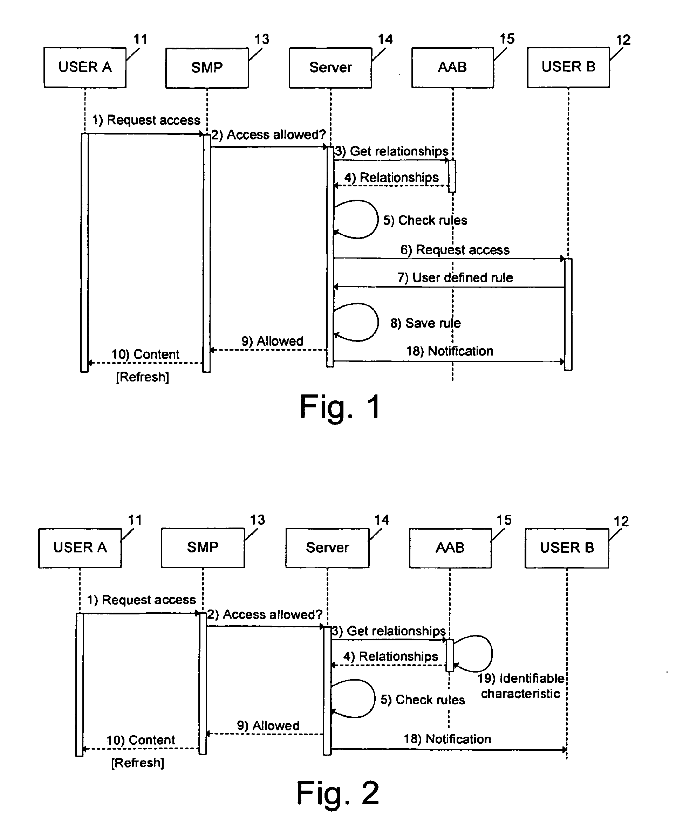

Fig. 1 is a message flow diagram illustrating the flow of messages in a first example of the method of the present invention. The figure illustrates User-A 11 and User-B 12 as well as three network nodes referred to as a Social Media Portal (SMP) 13, a server 14, and an Active Address Book (AAB) 15. The SMP 13, for example available from Ericsson, together with an open-standard initiative referred to as "the Pixl8r initiative", offers simplified sharing of user-generated content between users across diverse networks.

The Pixl8r initiative is an open-standard solution that enables photo sharing sites to interact in real time. With Pixl8r, mobile users can easily share social media across different operator portals and receive SMS notifications of the activities of other users regardless of the network type. Pixl8r creates a federation of community portals that can connect the world's approximately four billion mobile users. With Ericsson's SMP acting as an access server and browser, users can connect to the social web using any mobile phone. The solution does not require client downloads, and enables posting and accessing of real-time, user-generated content to diverse internet communities. Content is automatically backed up on a community portal that offers personal storage, synchronization, unified messaging, and services for sharing content such as photos and videos with friends and family.

In practical situation the server 14 may be implemented as a stand alone server, or may be integrated in a dedicated policy server, a Policy Engine, or any other type of server connected to the social media network and accessible from a telecommunications network.

The AAB 15 provides intelligent and automated centralized contact management for mobile users. The AAB enables users to create and publish their personal information to an online address book that automatically updates contact information when a contact in the address book publishes new contact information. Users can search, add, edit, and delete contacts using an AAB web portal. Flexible privacy levels let subscribers decide what information to share and with whom. The AAB works with native address books in existing mobile phones and can support IMS-enabled devices, web, and PC clients. Integrating the AAB with directories, Internet accounts, or social networking sites enables users to search and add more contacts to the address book.

The AAB thus provides a relationship database identifying relationships between each pair of users having a record in the AAB. The relationship information specifies a particular type or types of relationship between a pair of users.

A policy engine function in the server 14 retrieves relationships between various users from the AAB 15, and retrieves and stores access rules from each user defining for how long content is available to each user and possibly what content is available to other users.

The policy engine function in the server 14 may also retrieve relationship information from other type of sources, for example an internal database 40 in the server 14 or in the originating request itself, as will be explained in more detail below.

In Fig. 1, at step 1, User-A 11 sends a message to the SMP 13 requesting access to User-B's content-X. For example, this may be a friend or customer requesting to see User-B's vacation photographs. At step 2, the SMP queries the policy engine function in server 14 to determine whether User-A's access to content-X is allowed. The server has no relationship information between User-A and User-B, and thus at step 3, the policy engine function in server 14 contacts the AAB 15 to retrieve one or more relationships between User-A 11 and User-B 12. At step 4, the AAB 15 sends the relationships to the server 14.

At step 5, the policy engine function in server 14 checks a rules database, which may be implemented internally or externally to the server, to determine whether there are any access rules matching any of the relationships. In this particular scenario, it is assumed that there are no matching rules. Thus, at step 6, the policy engine function in the server sends an access request message to User-B 12. The access request message includes the relationships between User-A and User-B, and indicates that User-A 11 has requested access to content-X.

At step 7, User-B 12 provides an access rule to the server 14 indicating that User-A 11 is allowed to access content-X for a defined period of time. The access rule may also indicate, for example, that this rule applies to other users who have the same relationship to User-B. For example, all of User-B's family members or all of User-B's customers may be granted access to User-B's vacation photographs for a week or any other period of time to be specified. At step 8, the policy engine function in the server saves the new access rule in a rules database (not shown). At step 9, the server 14 sends a response to the SMP 13 indicating that User-A 11 is allowed to access content-X. At step 10, the SMP 13 returns access to the requested content-X to User-A 11.

The access rule in step 6 may be obtained from User-B 12 via the social media network, if User-B is logged on or online, for example, and/or using a messaging service, such as e-mail, SMS, MMS.

Once access is granted, an application within the SMP 13 or an access server may periodically refresh [Refresh] the accessed content and provide same to User-A. Additionally, the server 14 may notify 18 User-B that User-A accessed content-X during the defined period of time and/or attempted to access the content outside the specified period of time.

Fig. 2 is a message flow diagram illustrating the flow of messages in a second example of the method of the present invention. In this embodiment, an access rule matching the relationship between User-A 11 and User-B 12 is already stored in a rules database. Thus, at step 1, User-A 11 sends a message to the SMP 13 requesting access to User-B's content-X.

At step 2, the SMP 13 queries the policy engine function in server 14 to determine whether User-A's access to content-X is allowed. At step 3, the policy engine function in server 14 contacts the AAB 15 to retrieve in step 4 one or more relationships between User-A 11 and User-B 12. At step 5, the policy engine function in server 14 checks the rules database to determine whether there are any access rules matching any of the retrieved relationships. In this particular scenario, it is assumed that there is a matching rule. In particular it is indicated that the relationship is based on an identifiable characteristic 19 of User-A 11, and that User-B 12 has specified a rule that all users having this identifiable characteristic, such as a particular identity, are allowed to have access to the content-X.

Thus, at step 9, the server sends a response to the SMP 13 indicating that User-A 11 is allowed to access content-X. At step 6, the SMP 13 returns access to the requested content-X to User-A 11 in step 10. Once again, when access is granted, an application within the SMP 13 may periodically refresh [Refresh] the accessed content-X and provide it to User-A 11. Additionally, the policy engine function in server 14 may notify 18 User-B 12 that User-A 11 accessed content-X during the time period defined by the particular rule stored in the rules database.

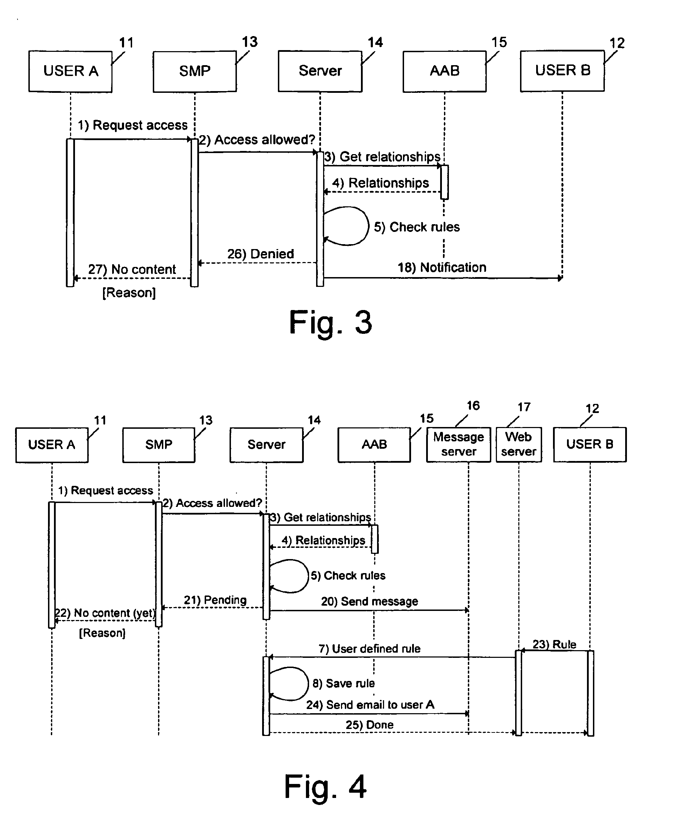

Fig. 3 is a message flow diagram illustrating the flow of messages in a third example of the method of the present invention. In this embodiment, a previously stored access rule matching the relationship between User-A 11 and User-B 12 has expired and may be deleted from the rules database or otherwise be indicated as invalid. Thus, at step 1, User-A 11 sends a message to the SMP 13 requesting access to User-B's content-X.

At step 2, the SMP 13 queries the server 14 to determine whether User-A's access to content-X is allowed. At step 3, the server 14 contacts the AAB 15 to retrieve one or more relationships between User-A 11 and User-B 12 in step 4. At step 5, the server 14 checks the rules database to determine whether there are any access rules matching any of the relationships. In this particular scenario, it is assumed that there is a matching rule, but the rule, and thus the authorized time period for access, has expired. Thus, at step 26, the server 14 sends a response to the SMP 13 indicating that User-A's request to access content-X is denied (due to the expiration of the rule). At step 27, the SMP 13 returns no content to User-A 11, and may notify User-A 11 of a reason [Reason] for the denial (for example, the access period has expired).

Alternatively, when the rule has expired, the SMP 13 may return a default content screen to User-A 11. The default content screen may be specified by User-B 12 through the rule, or may be pre-programmed in, or determined by, the SMP 13 whenever the server 14 denies a request for access. The default content screen may vary depending on the reason for denial. Additionally, the server 14 may notify 18 User-B 12 that User-A 11 attempted to access content-X after expiration of the time period defined by the rule stored in the rules database, and that access was denied.

Fig. 4 is a message flow diagram illustrating the flow of messages in a fourth example of the method of the present invention. In this embodiment, there is no matching rule for the relationship between User-A 11 and User-B 12 stored in the rules database, and User-B 12 is currently off-line, i.e. not logged on or available from the social media network. At step 1, User-A 11 sends a message to the SMP 13 requesting access to User-B's content-X. At step 2, the SMP 13 queries the server 14 to determine whether User-A's access to content-X is allowed. Assume that the policy engine function in the server 14 does not have relationship information between User-A 11 and User-B 12, and thus at step 3, the server 14 contacts the AAB 15 to retrieve one or more relationships between User-A 11 and User-B 12. At step 4, the AAB 15 sends the relationships to the server 14.

At step 5, the rules database is checked to determine whether there are any access rules matching any of the retrieved relationships, if any. In this particular scenario, it is assumed that there are no matching rules. Since User-B 12 is off-line, the server 14 sends a message at step 20 to a Message Server 16, such as an e-mail server and/or an SMS or MMS server, serving User-B 12. Assume an e-mail message is send in step 20. The e-mail message includes the relationships between User-A 11 and User-B 12, and indicates that User-A 11 has requested access to content-X. The e-mail message may also include a link to a web server 17 with instructions for User-B 12 to click on the link and enter one or more access rules to control User-A's access. Because it may take some period of time before User-B 12 responds to the e-mail message 20, the server 14 indicates to the SMP 15 at step 21 that the request is pending.

At step 22, the SMP 13 indicates to User-A 11 that there is no content available (yet), and may provide a reason [Reason] for the delay. Once again, the SMP 13 may return a default content screen to User-A 11. The default content screen may be specified by User-B 12 through a particular rule, or may be pre-programmed in, or determined by, the SMP 13 whenever the server 14 indicates there will be a delay processing the request for access 1.

At step 23, User-B 12 responds to the e-mail message 20 (for example by clicking on the link provided by this message) and provides an access indicating that User-A 11 is allowed to access content-X for a defined period of time. The access rule may also indicate that this rule applies to other users who have the same relationship to User-B, for example. At step 7, a Web Server 17 serving User-B 12 forwards the access rule to the server 14. At step 8, the server 14 saves the rule in the rules database. At step 24, the server 14 sends an e-mail message to the Message Server 16 for delivery to User-A 11 indicating that User-B 12 has granted/denied User-A 11 access to content-X for a specified time period. In the affirmative, within the specified time period, User-A 11 can then request access and view the content-X. At step 25, the server 14 may indicate to User-B 12 via the Web Server 17 that the access rule has been created.

Once the rule has been received with the server 14 in step 7, it will be appreciated that the policy engine function in server 14 will proceed to grant access to the content-X to User-A 11 as illustrated above with reference to steps 9 and 10 in Figs. 1, 2.

If no relationship information can be retrieved by the policy engine function from the AAB 15, this information may be requested from the User-B 12 in the same manner, for example, as illustrated in Fig. 4 with message 20. User-B 12 may create a relationship in the AAB 15, such that the request 1 can be further processed as illustrated above. User-A 11 may receive a message indicating the reason for not providing access, in the same manner as illustrated with reference to Fig. 4, for example.

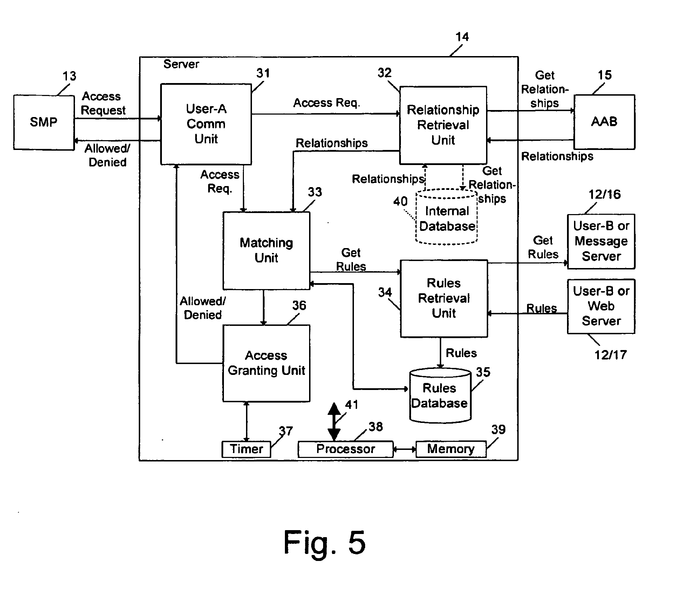

Fig. 5 is a simplified block diagram of an example of the server 14 of the present invention comprising the policy engine function. In this particular example, the policy engine function is comprised by a Relationship Retrieval Unit 32, a Matching Unit 33, a Rules Retrieval Unit 34 and an Access Granting Unit 36.

A User-A communication unit 31 receives the access request from the SMP 13 and passes it to the Relationship Retrieval Unit 32 and the Matching Unit 33. The Relationship Retrieval Unit 32 retrieves the relationships between User-A and User-B from the AAB 15 or an internal database 40, indicated in dashed lines, and sends the relationships to the Matching Unit 33. The Matching Unit 33 determines from a Rules Database 35 or an Active Rules Book, which may be located in the AAB 15, whether there are access rules that match the relationships. If not, the Matching Unit requests the Rules Retrieval Unit 24 to retrieve access rules from User-B. As noted above, this may be done directly with User-B 12 if User-B is online or through the Message Server 16 if User-B is off line. The access rules are received either directly from User-B 12 if User-B is online or through the Web Server 17 when User-B logs on after being off line.

The Rules Retrieval Unit 34 stores the access rules in the Rules Database 35 and the Matching Unit 33 accesses them to determine if there are access rules matching the relationships. The Matching Unit 33 sends a result to the Access Granting Unit 36 indicating whether there is an access rule matching the relationships. The Access Granting Unit 36 may have access to a Timer 37 for determining whether the time period specified in the access rule has expired. This Timer 37 may be configured for checking whether a particular time duration wherein access is allowed, such as one hour, one day, one week or the like, from the start of a first access, for example, has been expired, and/or comprising a calendar function for checking a particular time of the day, a particular day or days of a week and the like.

If the access rule allows access to the requested content-X, and the specified time period has not expired, the access granting unit sends an "Allowed" indication to the User-A Communication Unit 31, which forwards the Allowed indication to the SMP 13.

If there is no access rule matching the relationships, or the matching rule does not allow access to the requested content, or the matching rule has expired, the Access granting unit sends a "Denied" indication to the User-A Communication Unit 31, which forwards the Denied indication to the SMP 13.

The overall operation of the server 14 may be controlled by a common processor 38 executing computer program instructions stored in a memory 39. This control operation is schematically indicated by arrow 41. Alternatively, the server 14 may be implemented in hardware, firmware, or a combination of software, hardware, and firmware.

As will be recognized by those skilled in the art, the innovative concepts described in the present application can be modified and varied over a wide range of applications. Accordingly, the scope of patented subject matter should not be limited to any of the specific exemplary teachings discussed above, but is instead defined by the following claims.

## Claims

1. A method of granting access to electronic user content (10) for use in a social media network comprising a plurality of users (11; 12) and arranged for sharing electronic user content (10) amongst said plurality of users (11; 12), said method comprising the steps of:
- receiving, by a server (14), a request (1; 2) originating from a first user (11) of said plurality of users (11; 12) to access electronic user content (10) of a second user (12) of said plurality of users (11; 12), and
- processing said request (1; 2) by a policy engine function comprised in said server (14) for controlling access to said electronic user content (10), **characterized in that** said policy engine function performing the steps of
- retrieving relationship information (3, 4) specifying a type of relationship between said first (11) and said second user (12) comprising at least one identifiable characteristic (19),
- applying an access rule (5; 8) specified by said second user (12), said access rule (5; 8) matching said relationship information (4), said access rule (5; 8) specifying a period of time said electronic user content (10) of said second user (12) is available for said first user (11) and which content (10) of said second user's electronic content (10) said first user (11) is permitted to access, wherein
- when said specified period of time has not expired, said policy engine function allowing (9) said first user (11) having said identifiable characteristic (10) access to said second user's electronic permitted content (10) for said specified period of time; and
- when said specified period of time has expired, said policy engine function denying (26) said first user (11) access to said second user's electronic content (10).

2. The method as recited in claim 1, wherein said step of retrieving relationship information (3, 4) includes retrieving said relationship information (3, 4) from one of an internal database (40) in said server (14), a database (15) remote of said server (14), and said request (1; 2).

3. The method as recited in any of the previous claims, further comprising obtaining, by said policy engine function, said access rule (5; 8) from one of said second user (12), an internal database (35) in said server (14), and a database (15) remote of said server (14).

4. The method as recited in claim 3, wherein said access rule (5; 8) is obtained from said second user (12) via a messaging service (20).

5. The method as recited in any of the previous claims, further comprising notifying (18) said second user (12) that said first user (11) performed at least one of accessing said second user's content (10) during said specified period of time, and attempting to access said second user's electronic content (10) after said specified period of time expired.

6. A server (14) for controlling access to electronic user content (10) for use in a social media network comprising a plurality of users (11; 12) and arranged for sharing electronic user content (10) amongst said plurality of users (11; 12), said server comprising:
- a communication unit (31), arranged for receiving a request (1; 2) originating from a first user (11) to access electronic user content (10) of a second user (12) of said plurality of users (11; 12), **characterized by**
- a relationship retrieval unit (32), arranged for retrieving relationship information (3, 4) specifying a type of relationship between said first (11) and said second user (12) comprising at least one identifiable characteristic (19), and
- a matching unit (33), arranged for applying an access rule (5; 8) specified by said second user (12), said access rule (5; 8) matching said relationship information (4), said access rule (5; 8) specifying a period of time said electronic user content (10) of said second user (12) is available for said first user (11) and which content (10) of said second user's electronic content (10) said first user (11) is permitted to access;
- a timer (37), arranged for determining whether said specified period of time has expired; and
- an access granting unit (36), arranged for allowing (9) said first user (11) having said identifiable characteristic (10) access to said second user's electronic content (10) when said specified period of time has not expired (37) and arranged for denying (26) said first user (11) access to said second user's electronic permitted content (10) when said specified period of time has expired (37).

7. The server (14) as recited in claim 6, wherein said access granting unit (36) is arranged for allowing (9) restricted access to said second user's electronic content (10) specified by said access rule (5; 8).

8. The server (14) as recited in claim 6 or 7, wherein said relationship information comprises at least one identifiable characteristic (19), and wherein said relationship retrieval unit (32) is arranged for retrieving said identifiable characteristic (19) of said first user (11), and wherein said access granting unit (36) is arranged for allowing (9) said first user (11) having said identifiable characteristic (19) access to said second user's electronic content (10) for said specified period of time.

9. The server (14) as recited in any of the claims 6 - 8, wherein said relationship retrieval unit (32) is arranged for retrieving said relationship information (4) from one of an internal database (40) of said server, a database (15) remote of said server (14), and said request (1; 2).

10. The server (14) as recited in any of the claims 6 - 8, further comprising a rule retrieval unit (32), arranged for obtaining said access rule (5; 8) from one of said second user (12), an internal database (35) of said server and a database (15) remote of said server (14).

11. The server (14) as recited in claim 10, wherein said rule retrieval unit (32) is arranged for obtaining said access rule (5; 8) from said second user (12) via a messaging service (20).

12. The server (14) as recited in any of the claims 6 - 11, further comprising a communication unit arranged for sending to said second user (12), a notification (18) that said first user (11) performed at least one of accessing said second user's content (10) during said specified period of time, and attempting to access said second user's electronic content (10) after said specified period of time expired.

13. A system for controlling access to electronic user content (10) in a social media network comprising a Social Media Portal, SMP, (13) arranged for sharing electronic user content (10) amongst a plurality of users (11; 12), said system comprising a server (14) in communication with said SMP (13) and arranged for controlling access to said electronic user content (10), wherein said SMP (13) includes a unit for forwarding to said server (14) a request (1; 2) originating from a first user (11) to access electronic user content (10) of a second user (12) of said plurality of users (11; 12), and wherein said server (14) includes:
- a communication unit (31), arranged for receiving said request (1; 2),
wherein said server (14) is **characterized by**
- a relationship retrieval unit (32), arranged for retrieving relationship information (3, 4) specifying a type of relationship between said first and said second user (12) comprising at least one identifiable characteristic (19), and,
- a matching unit (33), arranged for applying an access rule (5; 8) specified by said second user (12), said access rule (5; 8) matching said relationship information (4), said access rule (5; 8) specifying a period of time said electronic user content (10) of said second user (12) is available for said first user (11) and which content (10) of said second user's electronic content (10) said first user (11) is permitted to access;
- a timer (37) arranged for determining whether said specified period of time has expired;
- an access granting unit (36), arranged for allowing (9) said first user (11) having said identifiable characteristic (10) access to said second user's electronic content (10) when said specified period of time has not expired (37) and arranged for denying (26) said first user (11) access to said second user's electronic content (10) when said specified period of time has expired (37),
wherein said communication unit (31) is further arranged for sending a response from said access granting unit (36) to said SMP (13) allowing (9) or denying (26) said first user (11) access to said second user's electronic permitted content (10).

## Patentansprüche

1. Ein Verfahren, Zugriff auf elektronischen Benutzerinhalt (10) zum Gebrauch in einem sozialen Mediennetzwerk zu gewähren, welches eine Vielzahl an Benutzern (11; 12) aufweist und welches eingerichtet ist, elektronischen Benutzerinhalt (10) unter der Vielzahl an Benutzern (11; 12) zu teilen, wobei das Verfahren die folgenden Schritte umfasst:
- Empfangen einer von einem ersten Benutzer (11) der Vielzahl an Benutzern (11; 12) kommenden Anfrage (1; 2) durch einen Server (14), auf elektronischen Benutzerinhalt (10) eines zweiten Benutzers (12) der Vielzahl an Benutzern (11; 12) zuzugreifen, und
- Verarbeiten der Anfrage (1; 2) durch eine Richtlinien-Engine-Funktion, die in dem Server (14) enthalten ist zur Steuerung des Zugriffs auf den elektronischen Benutzerinhalt, **dadurch gekennzeichnet, dass** die Richtlinien-Engine-Funktion die folgenden Schritte ausführt:
- Abrufen von Beziehungsinformationen (3, 4), die den Typ der Beziehung zwischen dem ersten (11) und dem zweiten Benutzer (12) angeben, umfassend wenigstens eine identifizierbare Charakteristik (19),
- Anwenden einer Zugriffsregel (5; 8) angegeben durch den zweiten Benutzer (12), wobei die Zugriffsregel (5; 8) zu der Beziehungsinformation (4) passt, wobei die Zugriffsregel (5; 8) eine Zeitspanne angibt, in der der elektronische Benutzerinhalt (10) des zweiten Benutzers (12) für den ersten Benutzer (11) verfügbar ist und angibt, für welchen Inhalt (10) des elektronischen Inhalts (10) des zweiten Benutzers dem ersten Benutzer (11) Zugriff gewährt ist, wobei
- wenn die angegebene Zeitspanne nicht abgelaufen ist, die Richtlinien-Engine-Funktion dem ersten Benutzer (11), der die identifizierbare Charakteristik (10) aufweist, Zugriff auf den erlaubten elektronischen Inhalt (10) des zweiten Benutzers für die angegebene Zeitspanne gewährt (9); und
- wenn die angegebene Zeitspanne abgelaufen ist, die Richtlinien-Engine-Funktion dem ersten Benutzer (11) Zugriff auf den elektronischen Inhalt (10) des zweiten Benutzers verwehrt (26).

2. Verfahren nach Anspruch 1, wobei der Schritt des Empfangens von Beziehungsinformationen (3, 4) das Abrufen der Beziehungsinformationen (3, 4) von einer der internen Datenbanken (40) in dem Server (14), eine von dem Server abgeschiedene Datenbank (15) oder die Anfrage (1; 2) umfasst.

3. Verfahren nach einem der vorangehenden Ansprüche, ferner umfassend den Schritt des Erhaltens, durch die Richtlinien-Engine-Funktion, der Zugriffsregel (5; 8) von einem der zweiten Benutzer (12), einer internen Datenbank (35) in dem Server (14) oder einer von dem Server (14) entfernten Datenbank (15).

4. Verfahren nach Anspruch 3, wobei die Zugriffsregel (5; 8) von dem zweiten Benutzer (12) über einen Benachrichtigungsdienst (20) erhalten wird.

5. Verfahren nach einem der vorangehenden Ansprüche, ferner umfassend den Schritt des Benachrichtigens (18) des zweiten Benutzers (12), dass der erste Benutzer (11) das Zugreifen auf den Inhalt (10) des zweiten Benutzers während der angegebenen Zeitspanne oder den Versuch, auf den elektronischen Inhalt (10) des zweiten Benutzers zuzugreifen, nachdem die angegebene Zeitspanne abgelaufen war, durchgeführt hat.

6. Ein Server (14) zur Steuerung des Zugriffs auf elektronischen Benutzerinhalt (10) zum Gebrauch in einem sozialen Mediennetzwerk, welches eine Vielzahl an Benutzern (11; 12) aufweist und welches eingerichtet ist, elektronischen Benutzerinhalt (10) unter der Vielzahl an Benutzern (11; 12) zu teilen, wobei der Server umfasst:
- eine Kommunikationseinheit (31), die eingerichtet ist, eine Anfrage (1; 2) von einem ersten Benutzer (11) kommend, auf elektronischen Benutzerinhalt (10) eines zweiten Benutzers (12) der Vielzahl an Benutzern (11; 12) zuzugreifen, zu empfangen, **gekennzeichnet durch**
- eine Beziehungsabrufeinheit (32), die eingerichtet ist, Beziehungsinformationen (3, 4), die den Typ der Beziehung zwischen dem ersten (11) und dem zweiten Benutzer (12) angeben, umfassend wenigstens eine identifizierbare Charakteristik (19), abzurufen, und
- eine Abgleicheinheit (33), die eingerichtet ist, eine Zugriffsregel (5; 8) angegeben **durch** den zweiten Benutzer (12), wobei die Zugriffsregel (5; 8) zu der Beziehungsinformation (4) passt, wobei die Zugriffsregel (5; 8) eine Zeitspanne angibt, in der der elektronische Benutzerinhalt (10) des zweiten Benutzers (12) für den ersten Benutzer (11) verfügbar ist und angibt, für welchen Inhalt (10) des elektronischen Inhalts (10) des zweiten Benutzers dem ersten Benutzer (11) Zugriff gewährt ist, anzuwenden;
- einen Timer (37), der eingerichtet ist, zu bestimmen, ob die angegebene Zeitspanne abgelaufen ist; und
- eine Zugriffsgewährungseinheit (36), die eingerichtet ist, dem ersten Benutzer (11), der die identifizierbare Charakteristik (10) aufweist, Zugriff auf den elektronischen Inhalt (10) des zweiten Benutzers zu gewähren (9), wenn die angegebene Zeitspanne nicht abgelaufen ist (37), und die eingerichtet ist, dem ersten Benutzer (11) Zugriff auf den erlaubten elektronischen Inhalt (10) des zweiten Benutzers zu verwehren (26), wenn die angegebene Zeitspanne abgelaufen ist (37).

7. Der Server (14) nach Anspruch 6, wobei die Zugriffsgewährungseinheit (36) eingerichtet ist, eingeschränkten Zugriff zu dem elektronischen Inhalt des zweiten Benutzers angegeben durch die Zugriffsregel (5; 8) zu gewähren (9).

8. Der Server (14) nach Anspruch 6 oder 7, wobei die Beziehungsinformationen wenigstens eine identifizierbare Charakteristik (19) aufweist, und wobei die Beziehungsabrufeinheit (32) eingerichtet ist, die identifizierbare Charakteristik (19) des ersten Benutzers (11) abzurufen, und wobei die Zugriffsgewährungseinheit (36) eingerichtet ist, dem ersten Benutzer (11), der die identifizierbare Charakteristik (19) aufweist, Zugriff zu dem elektronischen Inhalt (10) des zweiten Benutzers für die angegebene Zeitspanne zu gewähren (9).

9. Der Server (14) nach einem der Ansprüche 6 bis 8, wobei die Beziehungsabrufeinheit (32) eingerichtet ist, die Beziehungsinformation (4) von einer der internen Datenbanken (40) in dem Server (14), einer von dem Server entfernten Datenbank (15) oder der Anfrage (1; 2) abzurufen.

10. Der Server (14) nach einem der Ansprüche 6 bis 8 ferner umfassend eine Regelabrufeinheit (32), die eingerichtet ist, die Zugriffsregel (5; 8) von einem der zweiten Benutzer (12), einer internen Datenbank (35) in dem Server (14) oder einer von dem Server (14) entfernten Datenbank (15) zu erhalten.

11. Der Server (14) nach Anspruch 10, wobei die Regelabrufeinheit (32) eingerichtet ist, die Zugriffsregel (5; 8) von dem zweiten Benutzer (12) über einen Nachrichtendienst (20) zu erhalten.

12. Der Server (14) nach einem der Ansprüche 6 bis 11, ferner umfassend eine Kommunikationseinheit, die eingerichtet ist, eine Benachrichtigung (18) zu dem zweiten Benutzer (12) zu senden, dass der erste Benutzer (11) das Zugreifen auf den Inhalt (10) des zweiten Benutzers während der angegebenen Zeitspanne oder den Versuch, auf den elektronischen Inhalt (10) des zweiten Benutzers zuzugreifen, nachdem die angegebene Zeitspanne abgelaufen war, durchgeführt hat.

13. Ein System zur Steuerung des Zugriffs auf elektronischen Benutzerinhalt (10) in einem sozialen Mediennetzwerk, aufweisend ein soziales Medien Portal, SMP, (13) das eingerichtet ist, elektronischen Benutzerinhalt (10) unter einer Vielzahl von Benutzern (11; 12) zu teilen, wobei das System einen Server (14) in Kommunikation mit dem SMP (13) aufweist und eingerichtet ist, den Zugriff auf den elektronischen Benutzerinhalt (10) zu steuern, wobei das SMP (13) eine Einheit umfasst zum Weiterleiten einer von einem ersten Benutzer (11) kommenden Anfrage (1; 2) zu dem Server (14), auf elektronischen Benutzerinhalt (10) eines zweiten Benutzers (12) der Vielzahl an Benutzern (11; 12) zuzugreifen, und wobei der Server (14) umfasst:
- eine Kommunikationseinheit (31), die eingerichtet ist, die Anfrage (1; 2) zu empfangen, wobei der Server (14) **gekennzeichnet ist durch**
- eine Beziehungsabrufeinheit (32), die eingerichtet ist, Beziehungsinformationen (3, 4), die den Typ der Beziehung zwischen dem ersten und dem zweiten Benutzer (12) angeben, umfassend wenigstens eine identifizierbare Charakteristik (19), abzurufen, und
- eine Abgleicheinheit (33), die eingerichtet ist, eine Zugriffsregel (5; 8) angegeben **durch** den zweiten Benutzer (12), wobei die Zugriffsregel (5; 8) zu der Beziehungsinformation (4) passt, wobei die Zugriffsregel (5; 8) eine Zeitspanne angibt, in der der elektronische Benutzerinhalt (10) des zweiten Benutzers (12) für den ersten Benutzer (11) verfügbar ist und angibt, für welchen Inhalt (10) des elektronischen Inhalts (10) des zweiten Benutzers dem ersten Benutzer (11) Zugriff gewährt ist, anzuwenden;
- einen Timer (37), der eingerichtet ist, zu bestimmen, ob die angegebene Zeitspanne abgelaufen ist;
- eine Zugriffsgewährungseinheit (36), die eingerichtet ist, dem ersten Benutzer (11), der die identifizierbare Charakteristik (10) aufweist, Zugriff auf den elektronischen Inhalt (10) des zweiten Benutzers zu gewähren (9), wenn die angegebene Zeitspanne nicht abgelaufen ist (37), und die eingerichtet ist, dem ersten Benutzer (11) Zugriff auf den elektronischen Inhalt (10) des zweiten Benutzers zu verwehren (26), wenn die angegebene Zeitspanne abgelaufen ist (37),
wobei die Kommunikationseinheit (31) ferner eingerichtet ist zum Senden einer Antwort von der Zugriffsgewährungseinheit (36) zu dem SMP (13), dem ersten Benutzer (11) den Zugriff zu dem erlaubten elektronischen Inhalt des zweiten Benutzers zu gewähren (9) oder zu verwehren (26).

## Revendications

1. Procédé d'octroi d'accès à un contenu d'utilisateur électronique (10) pour une utilisation dans un réseau de média social comprenant une pluralité d'utilisateurs (11 ; 12) et agencé pour partager un contenu d'utilisateur électronique (10) entre ladite pluralité d'utilisateurs (11 ; 12), ledit procédé comprenant les étapes consistant à :
- recevoir, par un serveur (14), une demande (1 ; 2) provenant d'un premier utilisateur (11) de ladite pluralité d'utilisateurs (11 ; 12) pour accéder à un contenu d'utilisateur électronique (10) d'un second utilisateur (12) de ladite pluralité d'utilisateurs (11 ; 12), et
- traiter ladite demande (1 ; 2) par une fonction de moteur de politique comprise dans ledit serveur (14) pour contrôler l'accès audit contenu d'utilisateur électronique (10), **caractérisé en ce que** ladite fonction de moteur de politique effectuant les étapes consistant à
- récupérer des informations de relation (3, 4) spécifiant un type de relation entre ledit premier (11) et ledit second utilisateur (12) comprenant au moins une caractéristique identifiable (19),
- appliquer une règle d'accès (5 ; 8) spécifiée par ledit second utilisateur (12), ladite règle d'accès (5 ; 8) mettant en correspondance lesdites informations de relation (4), ladite règle d'accès (5 ; 8) spécifiant une période de temps pendant laquelle ledit contenu d'utilisateur électronique (10) dudit second utilisateur (12) est disponible pour ledit premier utilisateur (11) et à quel contenu (10) du contenu électronique (10) dudit second utilisateur ledit premier utilisateur (11) est autorisé à accéder, où
- lorsque ladite période de temps spécifiée n'a pas expiré, ladite fonction de moteur de politique permettant (9) audit premier utilisateur (11) ayant ladite caractéristique identifiable (10) l'accès au contenu autorisé électronique (10) dudit second utilisateur pour ladite période de temps spécifiée ; et
- lorsque ladite période de temps spécifiée a expiré, ladite fonction de moteur de politique refusant (26) audit premier utilisateur (11) l'accès au contenu électronique (10) dudit second utilisateur.

2. Procédé selon la revendication 1, dans lequel ladite étape consistant à récupérer des informations de relation (3, 4) inclut la récupération desdites informations de relation (3, 4) à partir d'une d'une base de données interne (40) dans ledit serveur (14), d'une base de données (15) distante dudit serveur (14), et de ladite demande (1 ; 2).

3. Procédé selon l'une quelconque des revendications précédentes, comprenant en outre l'obtention, par ladite fonction de moteur de politique, de ladite règle d'accès (5 ; 8) à partir d'un dudit second utilisateur (12), d'une base de données interne (35) dans ledit serveur (14), et d'une base de données (15) distante dudit serveur (14).

4. Procédé selon la revendication 3, dans lequel ladite règle d'accès (5 ; 8) est obtenue à partir dudit second utilisateur (12) via un service de messagerie (20).

5. Procédé selon l'une quelconque des revendications précédentes, comprenant en outre la notification (18) audit second utilisateur (12) que ledit premier utilisateur (11) a effectué au moins un de l'accès au contenu (10) dudit second utilisateur pendant ladite période de temps spécifiée, et de la tentative d'accès au contenu électronique (10) dudit second utilisateur après que ladite période de temps spécifiée a expiré.

6. Serveur (14) pour contrôler l'accès à un contenu d'utilisateur électronique (10) pour une utilisation dans un réseau de média social comprenant une pluralité d'utilisateurs (11 ; 12) et agencé pour partager un contenu d'utilisateur électronique (10) entre ladite pluralité d'utilisateurs (11 ; 12), ledit serveur comprenant :
- une unité de communication (31), agencée pour recevoir une demande (1 ; 2) provenant d'un premier utilisateur (11) pour accéder à un contenu d'utilisateur électronique (10) d'un second utilisateur (12) de ladite pluralité d'utilisateurs (11 ; 12), **caractérisé par**
- une unité de récupération de relation (32), agencée pour récupérer des informations de relation (3, 4) spécifiant un type de relation entre ledit premier (11) et ledit second utilisateur (12) comprenant au moins une caractéristique identifiable (19), et
- une unité de mise en correspondance (33), agencée pour appliquer une règle d'accès (5 ; 8) spécifiée par ledit second utilisateur (12), ladite règle d'accès (5 ; 8) mettant en correspondance lesdites informations de relation (4), ladite règle d'accès (5 ; 8) spécifiant une période de temps pendant laquelle ledit contenu d'utilisateur électronique (10) dudit second utilisateur (12) est disponible pour ledit premier utilisateur (11) et à quel contenu (10) du contenu électronique (10) dudit second utilisateur ledit premier utilisateur (11) est autorisé à accéder ;
- un temporisateur (37), agencé pour déterminer si ladite période de temps spécifiée a expiré ; et
- une unité d'octroi d'accès (36), agencée pour permettre (9) audit premier utilisateur (11) ayant ladite caractéristique identifiable (10) l'accès au contenu électronique (10) dudit second utilisateur lorsque ladite période de temps spécifiée n'a pas expiré (37) et agencée pour refuser (26) audit premier utilisateur (11) l'accès au contenu autorisé électronique (10) dudit second utilisateur lorsque ladite période de temps spécifiée a expiré (37).

7. Serveur (14) selon la revendication 6, dans lequel ladite unité d'octroi d'accès (36) est agencée pour permettre (9) un accès restreint au contenu électronique (10) dudit second utilisateur spécifié par ladite règle d'accès (5 ; 8).

8. Serveur (14) selon la revendication 6 ou 7, dans lequel lesdites informations de relation comprennent au moins une caractéristique identifiable (19), et dans lequel ladite unité de récupération de relation (32) est agencée pour récupérer ladite caractéristique identifiable (19) dudit premier utilisateur (11), et dans lequel ladite unité d'octroi d'accès (36) est agencée pour permettre (9) audit premier utilisateur (11) ayant ladite caractéristique identifiable (19) l'accès au contenu électronique (10) dudit second utilisateur pour ladite période de temps spécifiée.

9. Serveur (14) selon l'une quelconque des revendications 6 à 8, dans lequel ladite unité de récupération de relation (32) est agencée pour récupérer lesdites informations de relation (4) à partir d'une d'une base de données interne (40) dans ledit serveur, d'une base de données (15) distante dudit serveur (14), et de ladite demande (1 ; 2).

10. Serveur (14) selon l'une quelconque des revendications 6 à 8, comprenant en outre une unité de récupération de règle (32), agencée pour obtenir ladite règle d'accès (5 ; 8) à partir d'un dudit second utilisateur (12), d'une base de données interne (35) dudit serveur et d'une base de données (15) distante dudit serveur (14).

11. Serveur (14) selon la revendication 10, dans lequel ladite unité de récupération de règle (32) est agencée pour obtenir ladite règle d'accès (5 ; 8) à partir dudit second utilisateur (12) via un service de messagerie (20).

12. Serveur (14) selon l'une quelconque des revendications 6 à 11, comprenant en outre une unité de communication agencée pour envoyer audit second utilisateur (12), une notification (18) selon laquelle ledit premier utilisateur (11) a effectué au moins un de l'accès au contenu (10) dudit second utilisateur pendant ladite période de temps spécifiée, et de la tentative d'accès au contenu électronique (10) dudit second utilisateur après que ladite période de temps spécifiée a expiré.

13. Système pour contrôler l'accès à un contenu d'utilisateur électronique (10) dans un réseau de média social comprenant un Portail de Média Social, SMP, (13) agencé pour partager un contenu d'utilisateur électronique (10) entre une pluralité d'utilisateurs (11 ; 12), ledit système comprenant un serveur (14) en communication avec ledit SMP (13) et agencé pour contrôler l'accès audit contenu d'utilisateur électronique (10), dans lequel ledit SMP (13) inclut une unité pour transférer audit serveur (14) une demande (1 ; 2) provenant d'un premier utilisateur (11) pour accéder à un contenu d'utilisateur électronique (10) d'un second utilisateur (12) de ladite pluralité d'utilisateurs (11 ; 12), et dans lequel ledit serveur (14) inclut :
- une unité de communication (31), agencée pour recevoir ladite demande (1 ; 2),
dans lequel ledit serveur (14) est **caractérisé par**
- une unité de récupération de relation (32), agencée pour récupérer des informations de relation (3, 4) spécifiant un type de relation entre ledit premier et ledit second utilisateur (12) comprenant au moins une caractéristique identifiable (19), et,
- une unité de mise en correspondance (33), agencée pour appliquer une règle d'accès (5 ; 8) spécifiée par ledit second utilisateur (12), ladite règle d'accès (5 ; 8) mettant en correspondance lesdites informations de relation (4), ladite règle d'accès (5 ; 8) spécifiant une période de temps pendant laquelle ledit contenu d'utilisateur électronique (10) dudit second utilisateur (12) est disponible pour ledit premier utilisateur (11) et à quel contenu (10) du contenu électronique (10) dudit second utilisateur ledit premier utilisateur (11) est autorisé à accéder ;
- un temporisateur (37), agencé pour déterminer si ladite période de temps spécifiée a expiré ;
- une unité d'octroi d'accès (36), agencée pour permettre (9) audit premier utilisateur (11) ayant ladite caractéristique identifiable (10) l'accès au contenu électronique (10) dudit second utilisateur lorsque ladite période de temps spécifiée n'a pas expiré (37) et agencée pour refuser (26) audit premier utilisateur (11) l'accès au contenu électronique (10) dudit second utilisateur lorsque ladite période de temps spécifiée a expiré (37),
dans lequel ladite unité de communication (31) est en outre agencée pour envoyer une réponse de ladite unité d'octroi d'accès (36) audit SMP (13) permettant (9) ou refusant (26) audit premier utilisateur (11) l'accès au contenu autorisé électronique (10) dudit second utilisateur.
